# EUROPÄISCHE PATENTANMELDUNG

(11) **EP 1 800 780 A2**
(43) Veröffentlichungstag der Anmeldung: **27.06.2007**
(21) Anmeldenummer: 06024259.1
(22) Anmeldetag: 23.11.2006
(51) Int. Cl.: B23D 1/26, B23Q 9/00, B29C 37/04

(54) **Bearbeitungsvorrichtung für die Bearbeitung von Eckverbindungen von Fenster- oder Türrahmen**

(30) Priorität: 25.11.2005 DE 102005056552
(71) Anmelder: ROTOX GmbH B. EISENBACH, D-56858 Grenderich (DE)
(72) Erfinder:
(74) Vertreter: Müller, Eckhard

(57) **Zusammenfassung**

Die vorliegende Erfindung betrifft eine Vorrichtung zum manuellen Bearbeiten der Eckverbindungen von aus Profilstücken (12, 13; 14, 15), insbesondere Kunststoffprofilen, zusammengeschweißten Fenster- oder Türrahmenecken (18; 20, 22). Die Vorrichtung weist wenigstens ein entlang einer Gehrung (24; 26, 28) des Rahmenecks (18; 20, 22) verfahrbares Bearbeitungswerkzeug (52) auf, welches an einem auf dem Rahmeneck (18; 20, 22) zu liegen kommenden Auflageteil (30) geführt ist. Dieses ist mittels Anschlägen (32, 34, 36, 38) an dem Rahmen in Arbeitsstellung gehalten, wobei die Anschläge (32, 34, 36, 38) auf gegenüberliegenden Seiten jedes der Profilstücke (12, 13; 14, 15) des zu bearbeitenden Rahmenecks (18; 20, 22) zu liegen kommen. Hierbei ist vorgesehen, dass zur Bearbeitung von Kämpferverbindung bei Fenster- oder Türrahmen wenigstens ein Anschlag (32, 34) in eine Nicht-Anlagestellung bezüglich des Rahmens bewegbar ist (Figur 3).

## Beschreibung

Die vorliegende Erfindung betrifft eine Vorrichtung zum manuellen Bearbeiten der Eckverbindungen von aus Profilstücken, insbesondere Kunststoffprofilen, zusammengeschweißten Fenster- oder Türrahmenecken mittels wenigstens einem entlang der Gehrung des Rahmenecks verfahrbaren Bearbeitungswerkzeug, wobei das Bearbeitungswerkzeug an einem auf dem Rahmeneck zu liegen kommenden Auflageteil geführt ist und das Auflageteil mittels Anschlägen an dem Rahmen in Arbeitsstellung gehalten ist.

### Stand der Technik

Derartige Bearbeitungsvorrichtungen sind als solche im Stand der Technik hinlänglich bekannt. Sie dienen dazu, die beim Schweißen der Kunststoffprofilstücke an den Schweißnähten der Eckbereiche entstandenen und nach außen ragenden Schweißraupen zu entfernen bzw. diese abzutragen.

Hierbei kommen bspw. die aus der DE 27 22 283 C2 bekannten Schneidwerkzeuge zum Einsatz bei welchen beidseitig der Schneide Führungsflächen angeordnet sind. Diese Führungsflächen gleiten auf der Oberseite des zu bearbeitenden Rahmens und sollen werkstoffbedingte Unebenheiten auf der Kunststoffoberfläche ausgleichen.

Zur Bearbeitung Eckrahmen sind aus dem Stand der Technik ferner manuell betätigbare Bearbeitungsvorrichtungen bekannt, bei denen ein entlang der Gehrung des Rahmenecks verfahrbares Schneidwerkzeug vorgesehen ist. Dieses wird an einem auf dem Rahmen zu liegen kommenden Auflageteil geführt, welches mittels Anschlägen an dem Rahmen in einer Arbeitsstellung gehalten ist. Die Anschläge sind bei solch vorbekannten Vorrichtungen zumeist paarweise angeordnet und kommen an gegenüberliegenden Seiten jedes der beiden Profilstücke des zu bearbeitenden Rahmenecks zu liegen.

### Problem

Die vorbekannten manuell betätigbaren Bearbeitungsvorrichtungen sind aufgrund der Anordnung der Anschläge ausschließlich zur Bearbeitung von solchen Rahmenecken geeignet, welche von zwei senkrecht aufeinander stoßenden Profilstücken gebildet werden. Eine Bearbeitung von so genannten Kämpferverbindungen, mit wenigstens zwei aufeinander stoßenden Profilstücken, bspw. einem Fensterkreuz mit zwei im rechten Winkel zueinander verlaufenden oder sich kreuzenden Schweißraupen ist hiermit jedoch nicht möglich.

### Aufgabe

Der vorliegenden Erfindung liegt daher die Aufgabe zugrunde, eine eingangs genannte Bearbeitungsvorrichtung dahingehend weiter zu entwickeln, dass sie universell einsetzbar und insbesondere sowohl für die Bearbeitung von üblichen Rahmenecken als auch für die Bearbeitung von Kämpferverbindungen geeignet sind.

Erfindung und vorteilhafte Wirkungen

Die der Erfindung zugrunde liegende Aufgabe wird mittels einer Vorrichtung gemäß Patentanspruch 1 gelöst. Weitere vorteilhafte Ausführungsformen der Erfindung sind in den Unteransprüchen angegeben.

Die erfindungsgemäße Vorrichtung ist zum manuellen Bearbeiten von Eckverbindungen von aus Profilstücken und insbesondere Kunststoffprofilen zusammengeschweißten Fenster- oder Türrahmenecken vorgesehen. Die Vorrichtung weist hierfür wenigstens ein entlang der Gehrung des Rahmenecks verfahrbares Bearbeitungswerkzeug auf, welches an einem auf dem Rahmeneck zu liegen kommenden Auflageteil geführt ist. Das Auflageteil selbst kann mittels Anschlägen an dem Rahmen in einer Arbeitsstellung gehalten werden, wobei die Anschläge auf gegenüber liegenden Seiten der Profilstücke des zu bearbeitenden Rahmenecks zu liegen kommen.

Erfindungsgemäß ist vorgesehen, dass zur Bearbeitung von Kämpferverbindungen von Profilstücken wenigstens einer der Anschläge in eine Nicht-Anlagestellung bezüglich des Rahmens bewegbar ist. Dies ist insbesondere bei Kämpferverbindungen von Vorteil welche bspw. T-förmig ausgebildet sind oder bspw. ein Fensterkreuz bilden und von daher aus zumindest zwei oder drei aufeinander stoßenden Profilstücken mit sich kreuzenden Schweißraupen bestehen.

Durch das wechselseitige Überführen zumindest eines der Anschläge zwischen einer Anlage- und einer Nicht-Anlagestellung bezüglich des Rahmens kann die Vorrichtung zur Bearbeitung der Eckverbindung sowohl für Kämpferverbindungen von Profilstücken als auch für herkömmliche Eckverbindungen von Profilstücken, welche lediglich aus zwei im Wesentlichen im rechten Winkel aufeinander stoßenden Profilstücken gebildet sind, universell verwendet werden. Die Beweglichkeit zumindest eines Anschlags verleiht der Vorrichtung ein höheres Maß an Flexibilität und erspart dem Anwender letztlich die Anschaffung einer Vielzahl unterschiedlicher Bearbeitungsvorrichtungen und Bearbeitungsvorrichtungen, welche jeweils für sich genommen nur für ein begrenztes, auf die zu bearbeitende Eckverbindung vorgesehenes Einsatzgebiet geeignet sind.

Nach einer ersten vorteilhaften Ausgestaltung der Erfindung sind die Anschläge paarweise angeordnet und zumindest einer der außerhalb des jeweils zu bearbeitenden Innenecks in Arbeitsstellung zu liegen kommenden Anschläge ist in die Nicht-Anlagestellung bezüglich des Rahmens beweglich. Dem zufolge kann das an der Innenseite des Rahmenecks zu liegen kommende Anschlagspaar in aller Regel auch als nicht beweglich ausgebildet sein.

Nach einer weiteren vorteilhaften Ausgestaltung der Erfindung ist vorgesehen, dass der wenigstens eine bewegliche Anschlag zwischen Anlage- und Nicht-Anlagestellung verschwenkbar ist. Insbesondere ist vorgesehen, dass der wenigstens eine bewegliche Anschlag an dem Auflageteil verschwenkbar angeordnet ist, wobei die Schwenkachse in der Fensterebene, vorzugsweise orthogonal zur jeweils zu bearbeitenden Gehrung verläuft.

Weiterhin ist vorgesehen, dass die Paare von Anschlägen mit ihren Anlageflächen in einer gedachten Verlängerung jeweils einen Winkel von im Wesentlichen 90° aufspannen. Bei einer Kämpferverbindung kommen daher die dem jeweils zu bearbeitenden Inneneck zu liegen kommenden Anschläge an jeweils einem der Profilstücke zu liegen, während vorzugsweise nur einer der beweglichen Anschläge in einer Anlagestellung an einer bezüglich des zu bearbeitenden Innenecks gesehenen Außenseite eines Profilteils anliegt und sich ein weiterer beweglicher Anschlag in der Nicht-Anlagestellung befindet.

Da eine Kämpferverbindung im Wesentlichen zwei senkrecht zueinander verlaufende Gehrungen aufweist, können die beweglich ausgebildeten Anschläge in eine entgegengesetzte Konfiguration überführt werden, um so die Bearbeitung der jeweils anderen Gehrung zu ermöglichen, wobei die Vorrichtung in eine gegenüber der ursprünglichen Arbeitsstellung um 90° gedrehte Arbeitsstellung überführt werden kann. Das wechselseitige Bewegen beziehungsweise Verschwenken des außerhalb des jeweils zu bearbeitenden Innenecks zu liegend kommenden Paars von Anschlägen erlaubt eine universelle und leicht zu handhabende Anpassung der Bearbeitungsvorrichtung an das jeweils zu bearbeitende Rahmeneck.

Zur Bearbeitung von herkömmlichen Rahmenecken, welche aus zwei im rechten Winkel aufeinander stoßenden Profilteilen gebildet sind, ist in der Regel vorgesehen, dass sowohl die nicht beweglichen als auch die bezüglich des Rahmens beweglichen Anschläge sich in Anlagestellung an dem Rahmens befinden, um so das Rahmeneck zwischen den Paaren von Anschlägen einzuspannen. Hierdurch kann das Auflageteil und die gesamte Bearbeitungsvorrichtung sicher am Rahmeneck befestigen werden.

Nach einer weiteren vorteilhaften Ausführungsform der Erfindung ist vorgesehen, dass der wenigstens eine bewegliche Anschlag in Verfahrrichtung des Bearbeitungswerkzeuges verschiebbar ist. Insbesondere ist hierbei vorgesehen, dass die Anschläge paarweise in Bezug zueinander verschiebbar ausgebildet sind, sodass diese letztlich als Spannbacken fungieren, mittels derer die Bearbeitungsvorrichtung sicher an den die Eckverbindung bildenden Profilteilen befestigt werden kann.

Nach der Erfindung ist insbesondere vorgesehen, dass das außerhalb des zu bearbeitenden Innenecks der Eckverbindung zu liegen kommende Paar von Anschlägen gegenüber dem Auflageteil verschiebbar ausgebildet ist. Alternativ oder zusätzlich hierzu können natürlich auch die am zu bearbeitenden Inneneck vorgesehenen Anschläge der Vorrichtung gegenüber dem Auflageteil und/oder dem außerhalb zu liegen kommenden Paar von Anschlägen verschiebbar ausgebildet sein. Es ist jedoch zumindest vorgesehen, dass die Paare von Anschlägen wenigstens in Bezug zueinander verschiebbar am Auflageteil der Vorrichtung angeordnet sind.

Weiterhin ist von Vorteil, dass der wenigstens eine bewegliche Anschlag und/oder das Paar von beweglichen Anschlägen entlang zugeordneter Langlöcher des Auflageteils geführt ist. Die beweglich ausgebildeten Anschläge sind hierzu vorzugsweise außerhalb des Auflageteils schwenkbar an einem Halteteil angelenkt, welches mittelbar oder unmittelbar mit den Langlöchern des Auflageteils in Wirkverbindung steht.

Nach einer weiteren Ausführungsform der Erfindung sind in den Anlageflächen der Anschläge Haltezapfen integriert, welche eine gegenüber den horizontal ausgerichteten Profilstücken eine vertikale Haltefunktion ausüben.

Die Haltezapfen gelangen in Arbeitsstellung typischerweise mit einem in senkrecht zur Profilrichtung verlaufenden Hinterschnitt des Profilstücks in Anlagestellung und sorgen somit für eine vertikale Fixierung der Bearbeitungsvorrichtung am Tür- oder Fensterrahmeneck. Von Vorteil wird der Hinterschnitt für die Haltezapfen unmittelbar durch die Profilierung des Profilstücks gebildet.

Nach einer weiteren vorteilhaften Ausführungsform der Erfindung ist vorgesehen, dass dem wenigstens einen außerhalb des zu bearbeitenden Innenecks zu liegen kommenden beweglichen Anschlag ein Ersatzanschlag vorgelagert ist. Dieser wenigstens eine Ersatzanschlag ist bezüglich der Verfahrrichtung des Bearbeitungswerkzeuges seitlich und nach außen zum wenigstens einen beweglichen Anschlag an der Vorrichtung angeordnet. Der Ersatzanschlag ist insbesondere für die Bearbeitung von Kämpferverbindungen vorgesehen und ersetzt im Wesentlichen die Haltefunktion des sich in Nicht-Anlagestellung bezüglich des Rahmens befindlichen Anschlags. Insbesondere bei der Bearbeitung der Eckverbindungen einer T-förmig ausgebildeten Kämpferverbindung kommt der Ersatzanschlag im Bereich des gerade nicht bearbeiteten Innenecks bzw. an dessen Profilstück zu liegen.

Nach einer weiteren vorteilhaften Ausführungsform der Erfindung ist jedem der vorzugsweise als Paar ausgebildeten beweglichen Anschlägen ein Ersatzanschlag in, bezogen auf die Verfahrrichtung des Bearbeitungswerkzeug, spiegelsymmetrischer Anordnung vorgelagert.

Von Vorteil ist weiterhin, dass der wenigstens eine Ersatzanschlag einen zur Anlage am Profil vorgesehenen Rundstab aufweist. Diese Rundstab-Geometrie unterstützt insbesondere eine Vielzahl unterschiedlicher Anlagepositionen und Anlagestellungen für den Ersatzanschlag. SO kann die erfindungsgemäße Bearbeitungsvorrichtung insbesondere für eine Vielzahl unterschiedlicher Profilstücke, insbesondere von Profilstücken unterschiedlicher Breite, Verwendung finden.

Nach einer weiteren vorteilhaften Ausgestaltung der Erfindung ist der wenigstens eine in die Nicht-Anlagestellung bewegliche Anschlag mittels einer an dem Auflageteil gelagerten Gewindespindel verschiebbar ausgebildet. Die Gewindespindel verläuft hierbei vorzugsweise entlang der Verfahrrichtung des Bearbeitungswerkzeugs, das heißt im Wesentlichen entlang der Gehrung des zu bearbeitenden Rahmenecks, wenn sich die Bearbeitungsvorrichtung in Arbeitsstellung für das Rahmenteil befindet.

Mittels der Gewindespindel wird ein Stell- und Spannmechanismus zur Verfügung gestellt, der zum einen das Verschieben der Paare von Anschlägen und zum anderen das Einspannen der Profilteile zwischen den beweglichen Anschlägen in einfacher Art und Weise ermöglicht.

Nach einer weiteren Ausführungsform weist die Vorrichtung an der Gewindespindel eine Schnellverstellung auf, mittels derer die Gewindespindel in und außer Eingriff mit einem Gegengewinde bringbar ist. Das Gegengewinde ist hierbei vorzugsweise mit den gegenüber dem Auflageteil verschiebbaren Anschlägen und die Gewindespindel mit dem Auflageteil in mechanischer Wirkverbindung.

### Ausführungsbeispiel

Weitere Ziele, Vorteile, Merkmale und Anwendungsmöglichkeiten der vorliegenden Erfindung ergeben sich aus der nachfolgenden Beschreibung der Ausführungsbeispiele anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: die Bearbeitungsvorrichtung in Arbeitsstellung an einem aus zwei Profilteilen gebildeten Rahmeneck,
- Figur 2: eine perspektivische Darstellung der Vorrichtung in Arbeitsstellung gemäß Figur 1,
- Figur 3: die Bearbeitungsvorrichtung in Arbeitsstellung an einer Kämpferverbindung eines Fenster- oder Türrahmens,
- Figur 4: die Bearbeitungsvorrichtung gemäß Figur 3 in perspektivischer Darstellung,
- Figur 5: eine Darstellung gemäß Figur 3 mit der Bearbeitungsvorrichtung in Arbeitsstellung an dem im Vergleich zu Figur 3 anderen Rahmeneck,
- Figur 6: eine perspektivische Darstellung der Anordnung gemäß Figur 5,
- Figur 7: eine perspektivische Darstellung der Vorrichtung mit Bearbeitungswerkzeug,
- Figur 8: eine weitere perspektivische Darstellung des Bearbeitungswerkzeuges und
- Figur 9: eine perspektivische Darstellung des Bearbeitungswerkzeugs gemäß der Figuren 7 und 8 schräg von unten.

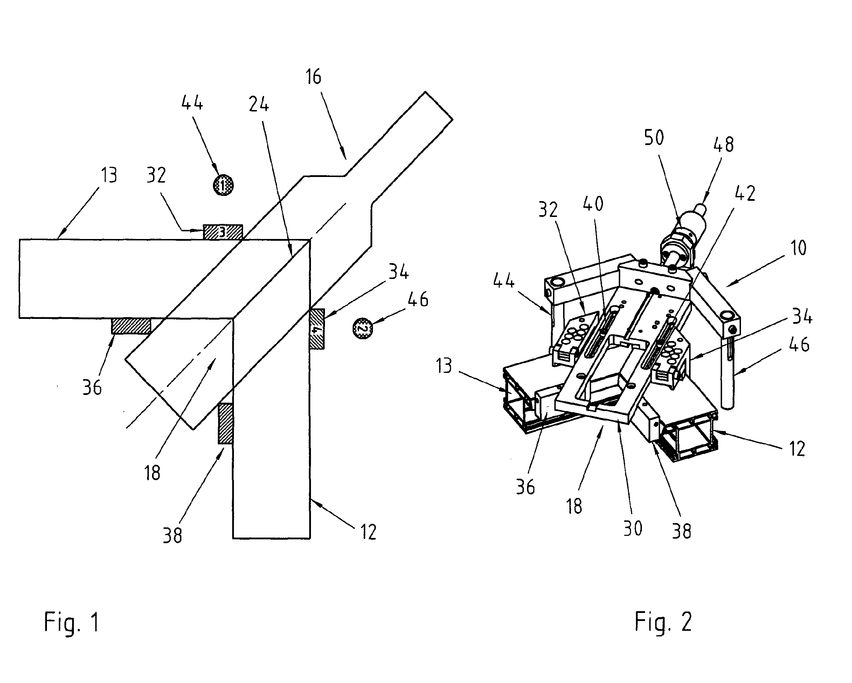

Die in den Figuren 1 und 2 dargestellte Bearbeitungsvorrichtung 10 weist ein Auflageteil 30 auf, mit welchem das Bearbeitungsvorrichtung 10 auf dem Rahmeneck 18 zu liegen kommt. Das Rahmeneck 18 wird hierbei im Wesentlichen von zwei im rechten Winkel aufeinander stoßenden, auf Gehrung geschnittenen Profilteilen 12, 13 gebildet, wobei diese im Stoßbereich in einer Gehrung 24 zusammengeschweißt sind. Die mittels der Bearbeitungsvorrichtung 10, bzw. deren Bearbeitungswerkzeug 52 abzutragenden Schweißwulste verlaufen typischerweise entlang der Gehrung 24.

Zum Fixieren und Halten der hier nur teilweise und ohne Bearbeitungswerkzeug 52 dargestellten Bearbeitungsvorrichtung 10 am Rahmeneck 18 sind an der Unterseite des Auflageteils 30 Paare von Anschlägen oder Spannbacken 32, 34, 36, 38 vorgesehen, die mit den das Innen- und Außeneck bildenden Seiten der Profilteile 12, 13 in Anlagestellung sind. Das für das Inneneck vorgesehene Paar von Anschlägen 36, 38 ist hierbei vorzugsweise fest mit dem Auflageteil 30 verbunden, während die außerhalb, d.h. im Bereich des dem zu bearbeitenden Inneneck gegenüberliegenden Außenecks zu liegen kommenden Anschläge oder Spannbacken 32, 34, über Langlochführungen 40, 42 in Längsrichtung des Bearbeitungsvorrichtung 10 verschiebbar am Auflageteil 30 befestigt sind.

Die Anlageflächen der einzelnen Paare von Anschlägen 36,38 und 32, 34 spannen in einer gedachten Verlängerung jeweils einen Winkel von im Wesentlichen 90° auf. Zudem sind die in Längsrichtung der Bearbeitungsvorrichtung, beziehungsweise in Verfahrrichtung des verfahrbaren Bearbeitungswerkzeugs voneinander beabstandet angeordneten Anschläge 38, 34 und 36, 32 mit ihren Anschlagsflächen im Wesentlichen parallel zueinander ausgerichtet. Die Anlageflächen sind hierbei im Wesentlichen um 45° bezüglich der Gehrungslinie 45 des Rahmenteils oder der Längsachse der Bearbeitungsvorrichtung 10 angeordnet, um so zur Befestigung oder Fixierung der Bearbeitungsvorrichtung 10 am Rahmeneck 18 die einzelnen Profilteile 12, 13 sowohl von der Innenseite als auch von der Außenseite sicher und flächig zu umfassen.

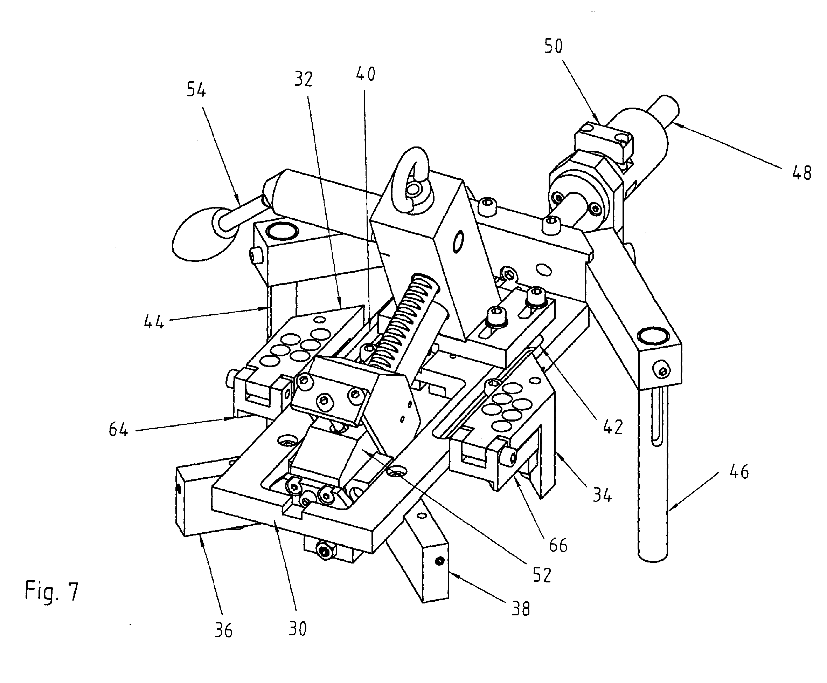

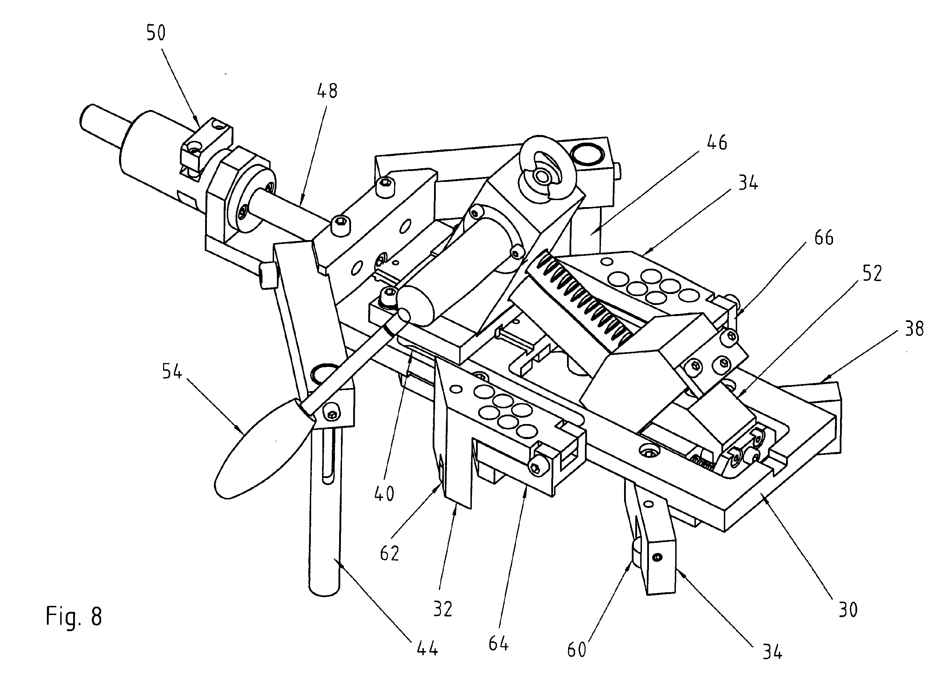

Des Weiteren ist an dem Bearbeitungsvorrichtung 10 eine Gewindespindel 48 vorgesehen, die mit dem Auflageteil 30 fest verbunden ist. Auf der Gewindespindel 48 ist ein Gegengewinde mit einer Schnellverstellung 50 vorgesehen, welches mit in den Figuren 7 bis 9 dargestellten Halteteilen 64, 66 verbunden ist. Diese sind unterhalb des Auflageteils 30 mittels einer Halteplatte 68 in den Langlöchern 40, 42 des Auflageteils 30 geführt und gehalten. An den Halteteilen 64, 66 sind die beweglichen Anschläge 32, 34 schwenkbar angeordnet.

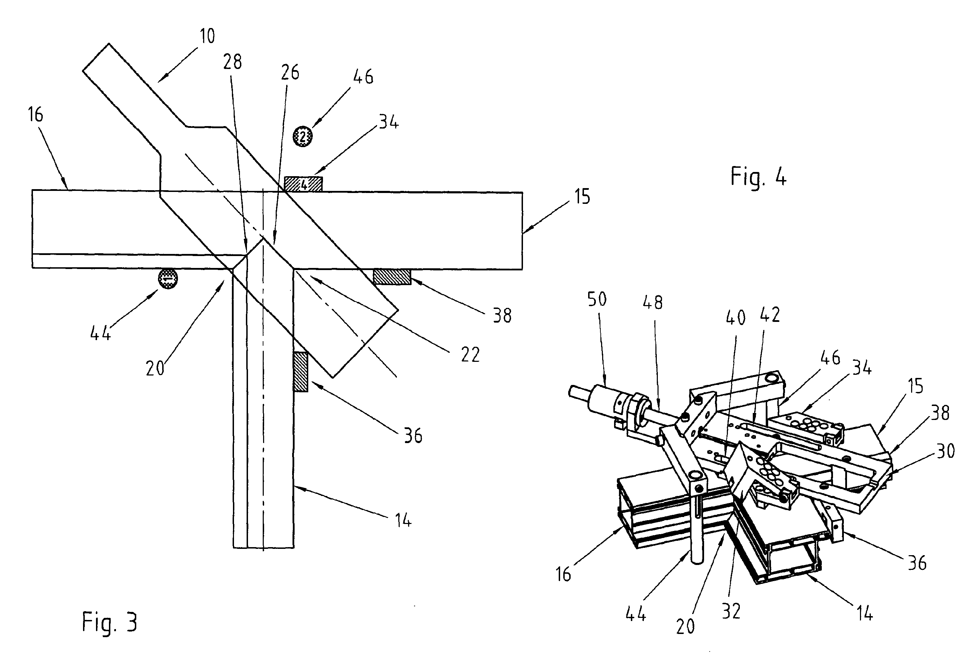

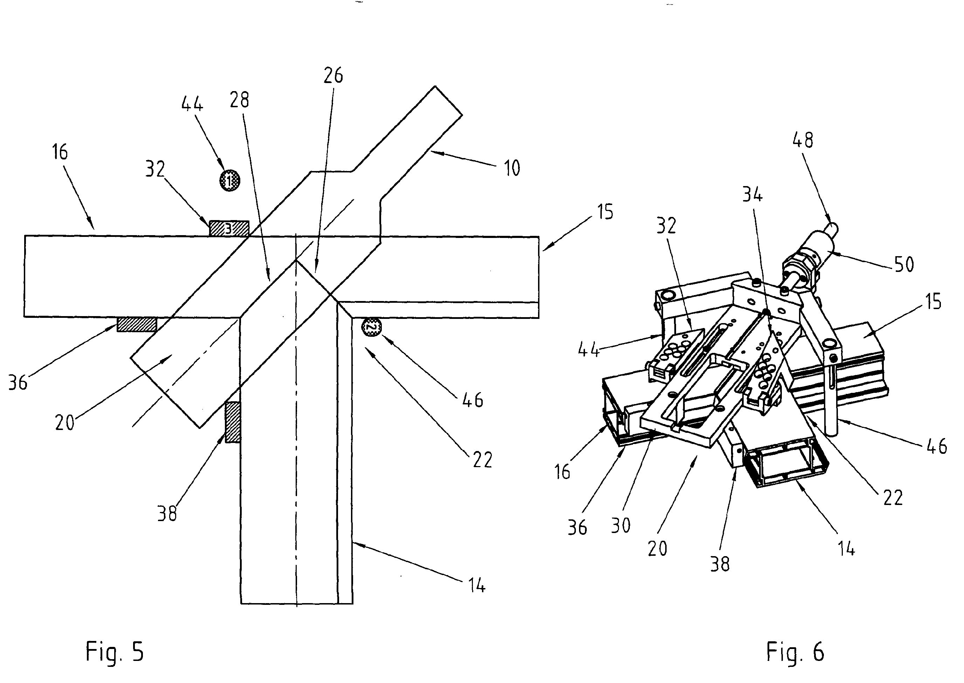

In den Figuren 3 und 4 ist die Bearbeitungsvorrichtung 10 in einer Arbeitsstellung an einer Kämpferverbindung gehalten, welche aus insgesamt zwei Profilstücken 14, 15 gebildet wird. Diese T-förmige Kämpferverbindung weist zwei im Wesentlichen senkrecht zueinander verlaufende Gehrungen 26, 28 im Bereich ihrer Innenecken 22, 20 auf. In der in Figur 3 in einer Draufsicht gezeigten, teilweise geschnittenen Darstellung ist deutlich zu erkennen, dass das Paar von Anschlägen 36, 38 an den Profilstücken 14, 15 anliegt, welche das zu bearbeitenden Inneneck 22 und die daran angrenzende Gehrung 26 bilden.

Der Anschlag 32, welcher in den Darstellungen gemäß der Figuren 1 und 2 zum Halten der Bearbeitungsvorrichtung 10 im Bereich des angrenzenden Ecks zu liegen käme, ist in der in den Figuren 3 und 4 dargestellte Konfiguration hochgeklappt und befindet sich somit in einer Nicht-Anlagestellung bezüglich der aus den Profilteilen 14, 15, gebildeten Kämpferverbindung des Tür- oder Fensterrahmens. An seinerstatt kommt hier nunmehr der als Rundstab ausgebildete Ersatzanschlag 44 zum Einsatz, welcher bezogen auf die Längsrichtung der Bearbeitungsvorrichtung 10 weiter außen mit dem Auflageteil 30 verbunden bzw. an diesem angeordnet ist.

Dieser Ersatzanschlag 44 ersetzt im Wesentlichen die Funktion des hochgeklappten Anschlags 32, welcher aufgrund der Geometrie der T-förmigen Kämpferverbindung nicht mit der in Figur 3 linken Seite des Profilteils 14 in Anlagestellung gebracht werden könnte. Der Anschlag 32, wie er in den Figuren 1 und 2 abgebildet ist, würde bei einer Anordnung gemäß Figuren 3 und 4 nämlich in den Bereich des Innenecks 20 fallen, in welchem er aufgrund des Profilschenkels 16 des Profilstückes 15 nicht seitlich am Profilteil 14 angreifen kann.

In der nach den Figuren 3 und 4 dargestellten Konfiguration ist lediglich der Anschlag 34 als beweglicher Anschlag ausgebildet, der eine Spannfunktion übernimmt. Mittels der aus Gewindespindel 48 und Gegengewinde ausgebildeten Verstelleinrichtung kann der Anschlag 34 entlang der Längserstreckung der Bearbeitungsvorrichtung 10 und bei der gemäß Figur 3 dargestellten Arbeitsstellung entlang der Gehrung 26 verschoben werden. Die Anordnung des Ersatzanschlags 44 an der Bearbeitungsvorrichtung 10 ist hierbei auf die Breite des Profilschenkels 16 abgestimmt und entspricht in etwa der vertikalen Position des Anschlags 38 in Figur 3.

Durch den Verstellmechanismus kann über den beweglichen und verschiebbaren Anschlag 34 eine hinreichende Zuspannkraft auf die Profilteile 14, 15 und damit auf das als Kämpferverbindung ausgebildete Rahmeneck ausgeübt werden, die eine zuverlässige und sichere Befestigung beziehungsweise Fixierung der Bearbeitungsvorrichtung 10 am Fenster- oder Türrahmeneck gewährleistet.

In den Figuren 5 und 6 ist die in den Figuren 3 und 4 spiegelsymmetrische Arbeitsstellung der Bearbeitungsvorrichtung 10 gezeigt. Die Ausrichtung der Bearbeitungsvorrichtung 10 gemäß Figur 5 ist gegenüber der in Figur 3 gezeigten Konfiguration um 90° im Uhrzeigersinn gedreht. In den Darstellungen gemäß der Figuren 5 und 6 befindet sich die Bearbeitungsvorrichtung 10 in einer Arbeitsstellung, in welcher die Schweißwulste der Gehrung 28 abgetragen werden können.

Aufgrund der gedrehten Anordnung ist nun gegenüber der in den Figuren 3 und 4 gezeigten Anordnung der Anschlag 32 heruntergeklappt und in Anlagestellung mit dem Profilschenkel 16, während der andere beweglich ausgestaltete Anschlag 34 hochgeklappt ist. Dieser würde in der gemäß der Figuren 5 und 6 gezeigten Konfiguration ansonsten nämlich mit dem Profilteil 14 kollidieren. Die Haltefunktion des Anschlags 34 wird nun von dem als Rundstab 46 ausgebildeten Ersatzanschlag übernommen. Die Arbeits- und Funktionsweise der Bearbeitungsvorrichtung 10 ist in beiden in den Figuren 3 und 4 sowie den in den Figuren 5 und 6 dargestellten Konfiguration im Wesentlichen identisch.

In den Figuren 7 bis 9 sind perspektivische Detailansichten der Schneidvorrichtung 10 ohne Rahmen- und Profilteile wiedergegeben. Anhand der Figur 7 ist deutlich die schwenkbare Anordnung des Anschlags 34 an einem Halteteil 66 zu erkennen, welches über das Langloch 42 und einer Platte 68 entlang der Längsachse der Bearbeitungsvorrichtung 10 am Auflageteil 30 verschiebbar angeordnet ist. Zudem zeigen die Figuren 7 bis 9 das Bearbeitungswerkzeug 52, welches über einen Betätigungshebel 54 in Längsrichtung der Bearbeitungsvorrichtung 10 manuell verfahrbar ist.

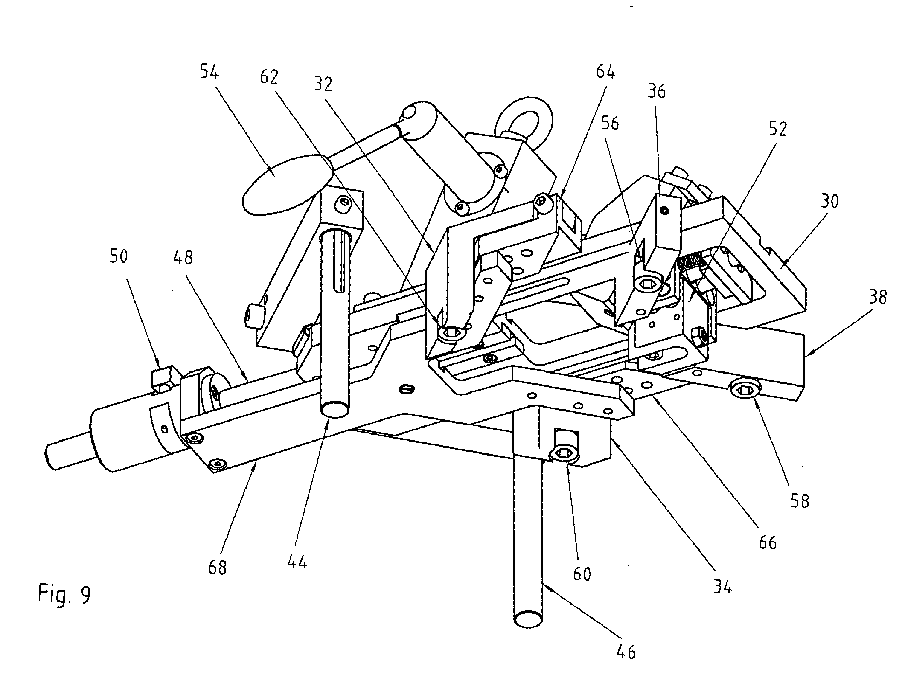

Nach der perspektivischen Ansicht von unten gemäß Figur 9 ist deutlich zu erkennen, dass die Halteteile 64, 66 für die schwenkbare Anordnung der Anschläge 32, 34 an einer Platte 68 angeordnet sind, welche entlang der Unterseite des Auflageteils 30 verfahrbar ist. Hierbei steht die Platte 68 mit den Langlöchern 40, 42 des Auflageteils 30 in Wirkverbindung. Während die Gewindespindel 48 fest mit dem Auflageteil 30 verbunden ist. Somit steht die Platte 68 in mechanischer Wirkverbindung mit dem Gegengewinde der Gewindespindel 48, sodass über diesen Verstellmechanismus letztlich ein Verschieben des Paars von Anschlägen 32, 34 gegenüber den dem jeweils zu bearbeitenden Inneneck zugeordneten Anschlägen 36, 38 ermöglicht wird. Der Verstellmechanismus ist zudem mit einer Schnellverstellung 50 im Bereich der Gewindespindel 48 ausgestattet, sodass ein schnelles und flexibles Wechseln der Bearbeitungsvorrichtung 10 sowie deren Befestigung an dem Rahmen in leicht zu handhabender Weise ermöglicht wird.

Weiterhin sind in der Darstellung gemäß Figur 9 die einzelnen Haltezapfen 56, 58, 60, 62 zu erkennen, welche im Bereich der Anschlagsflächen ihrer zugeordneten Anschläge 36, 38, 34, und 32 angeordnet sind, und in Arbeitsstellung zur vertikalen Fixierung der Bearbeitungsvorrichtung seitlich an den Profilstücken 14, 15 anliegen.

Bezugszeichenliste
- 10 -: Bearbeitungsvorrichtung
- 12 -: Profilstück
- 13 -: Profilstück
- 14 -: Profilstück
- 15 -: Profilstück
- 16 -: Profilschenkel
- 20 -: Rahmeneck
- 22 -: Rahmeneck
- 24 -: Gehrung
- 26 -: Gehrung
- 28 -: Gehrung
- 30 -: Auflageteil
- 32 -: Anschlag
- 34 -: Anschlag
- 36 -: Anschlag
- 38 -: Anschlag
- 40 -: Langloch
- 42 -: Langloch
- 44 -: Rundstab
- 46 -: Rundstab
- 48 -: Gewindespindel
- 50 -: Schnellverstellung
- 52 -: Bearbeitungswerkzeug
- 54 -: Betätigungshebel
- 56 -: Haltezapfen
- 58 -: Haltezapfen
- 60 -: Haltezapfen
- 62 -: Haltezapfen
- 64 -: Halteteil
- 66 -: Halteteil
- 68 -: Platte

## Patentansprüche

1. Vorrichtung zum manuellen Bearbeiten der Eckverbindungen von aus Profilstücken(12, 13; 14, 15), insbesondere Kunststoffprofilen, zusammengeschweißten Fenster- oder Türrahmenecken (18; 20, 22) mittels wenigstens eines entlang der Gehrung (24; 26, 28) des Rahmenecks (18; 20, 22) verfahrbaren Bearbeitungswerkzeugs (52), welches an einem auf dem Rahmeneck (18; 20, 22) zu liegen kommenden Auflageteil (30) geführt ist, das mittels Anschlägen (32, 34, 36, 38) an dem Rahmen in Arbeitsstellung gehalten ist, wobei die Anschläge (32, 34, 36, 38) auf gegenüberliegenden Seiten jedes der beiden Profilstücke (12, 13; 14, 15) des zu bearbeitenden Rahmenecks (18; 20, 22) zu liegen kommen, **dadurch gekennzeichnet, dass** zur Bearbeitung von Kämpferverbindung von Profilstücken (14, 15) wenigstens ein Anschlag (32, 34) in eine Nicht-Anlagestellung bezüglich des Rahmens bewegbar ist.

2. Vorrichtung nach Anspruch 1, **dadurch gekennzeichnet, dass** der außerhalb des jeweils zu bearbeitenden Innenecks (18, 20, 22) zu liegen kommende Anschlag (32 bzw. 34) in die Nicht-Anlagestellung bezüglich des Rahmens bewegbar ist.

3. Vorrichtung nach einem der vorhergehenden Ansprüche 1 oder 2, **dadurch gekennzeichnet, dass** der wenigstens eine Anschlag (32, 34) in die Nicht-Anlagestellung verschwenkbar ist.

4. Vorrichtung nach einem der vorhergehenden Ansprüche 2 oder 3, **dadurch gekennzeichnet, dass** das Paare von Anschlägen (32, 34, bzw. 36, 38) mit ihren Anlageflächen in einer gedachten Verlängerung jeweils einen Winkel von im Wesentlichen 90° aufspannen.

5. Vorrichtung nach einem oder mehreren der vorhergehenden Ansprüche, **dadurch gekennzeichnet, dass** der wenigstens eine bewegliche Anschlag (32, 34) in Verfahrrichtung des Bearbeitungswerkzeuges (52) verschiebbar ist.

6. Vorrichtung nach einem oder mehreren der vorhergehenden Ansprüche, **dadurch gekennzeichnet, dass** der wenigstens eine bewegliche Anschlag (32, 34) entlang zugeordneter Langlöcher (40, 42) des Auflageteils (30) geführt ist.

7. Vorrichtung nach einem oder mehreren der vorhergehenden Ansprüche, **dadurch gekennzeichnet, dass** in den Anlageflächen der Anschläge (32, 34, 36, 38) Haltezapfen (56, 58, 60, 62) integriert sind.

8. Vorrichtung nach einem oder mehreren der vorhergehenden Ansprüche, **dadurch gekennzeichnet, dass** dem wenigstens einen außerhalb des zu bearbeitenden Innenecks (18, 20, 22) zu liegen kommenden beweglichen Anschlag (32, 34) ein Ersatzanschlag (44, 46) vorgelagert ist.

9. Vorrichtung nach Anspruch 8, **dadurch gekennzeichnet, dass** jedem beweglichen Anschlag (32, 34) ein Ersatzanschlag (44, 46) vorgelagert ist.

10. Vorrichtung nach einem oder mehreren der vorhergehenden Ansprüche 8 oder 9, **dadurch gekennzeichnet, dass** der wenigstens eine Ersatzanschlag einen zur Anlage am Profil (15) vorgesehenen Rundstab (44, 46) aufweist.

11. Vorrichtung nach einem oder mehreren der vorhergehenden Ansprüche, **dadurch gekennzeichnet, dass** der wenigstens in die Nicht-Anlagestellung bewegliche Anschlag (32, 34) mittels einer an dem Auflageteil (30) gelagerten Gewindespindel (48) verschiebbar ist.

12. Vorrichtung nach Anspruch 11, **dadurch gekennzeichnet, dass** eine Schnellverstellung (50) vorgesehen ist, mittels welcher die Gewindespindel (48) in und außer Eingriff mit einem Gegengewinde bringbar ist.
